# EUROPÄISCHE PATENTSCHRIFT

(11) **EP 1 258 187 B1**
(45) Veröffentlichungstag und Bekanntmachung des Hinweises auf die Patenterteilung: **02.08.2006**
(21) Anmeldenummer: 02010651.4
(22) Anmeldetag: 13.05.2002
(51) Int. Cl.: A01D 69/00

(54) **Antriebsanordnung für eine landwirtschaftliche Maschine**
Drive system for agricultural machine
Système d'entraînement pour machine agricole

(30) Priorität: 16.05.2001 DE 20108221 U
(43) Veröffentlichungstag der Anmeldung: 20.11.2002
(73) Patentinhaber: Wilhelm Stoll Maschinenfabrik GmbH, 38268 Lengede (DE)
(72) Erfinder: Hanusch, Thomas, 38268 Lengede (DE)
(74) Vertreter: Harwardt, Günther

(56) Entgegenhaltungen:
- EP-A- 1 096 163
- GB-A- 889 495
- US-A- 4 089 396

## Beschreibung

Die Erfindung betrifft eine Antriebsanordnung für eine landwirtschaftliche Maschine, insbesondere Heuwerbungsmaschine, mit mindestens zwei im Wege der Leistungsverzweigung durch einen gemeinsamen Antrieb über jeweils einen Abtrieb synchron antreibbare Maschinengruppen und mit Mitteln zur Absicherung gegen Überlastung, wie aus dem Dokument EP 1 096 163 bekannt.

Solche Antriebe für landwirtschaftliche Maschinen, insbesondere Heuwerbungsmaschinen sind in der Praxis mehrfach bekannt, beispielsweise aus dem Prospekt P 1259a der Wilhelm Stoll Maschinenfabrik GmbH, 38268 Lengede/Broistedt, Deutschland. Die rechten sowie linken Kreiselrechen dieser bekannten Heuwerbungsmaschine werden dabei von einem zentralen Mittelgetriebe aus angetrieben. Diesem Mittelgetriebe ist beispielsweise als Teil der Gelenkwelle eine Überlastkupplung vorgeschaltet. Sowohl die Überlastkupplung als auch die übrigen Antriebsteile der Heuwerbungsmaschine sind dabei entsprechend stark zu dimensionieren, da sowohl die linke Maschinengruppe mit vier Kreiselrechen als auch die rechte Maschinengruppe mit ebenfalls vier Kreiselrechen unter Beibehaltung des Synchronlaufs der beiden mittleren Kreiselrechen gemeinsam anzutreiben sind. Insbesondere bei Großmaschinen mit großen synchron anzutreibenden Maschinengruppen ergeben sich für den Antrieb gewisse Nachteile, insbesondere was die erforderliche starke Dimensionierung des Antriebs und demzufolge die entsprechend hohen Kosten dafür angeht.

Ziel der vorliegenden Erfindung ist es, eine Antriebsanordnung zu schaffen, die mit geringerem konstruktiven Aufwand und damit geringeren Kosten für den Antrieb eine Überlastabschaltung bei Beibehalt des Synchronlaufs der anzutreibenden Maschinengruppen gewährleistet.

Gemäß der vorliegenden Erfindung wird dies dadurch erreicht, daß jedem Abtrieb eine Überlastkupplung in Form einer Sperrkörperkupplung, deren zu übertragendes Drehmoment nach dem Ansprechen auf ein Restmoment abfällt, zugeordnet ist,
daß alle Überlastkupplungen ein gemeinsames antreibendes erstes Kupplungsteil aufweisen, das mit dem Antrieb verbunden ist oder jeweils ein antreibendes erstes Kupplungsteil aufweisen, wobei die einzelnen ersten Kupplungsteile drehmäßig miteinander und dem Antrieb verbunden sind,
daß alle Überlastkupplungen jeweils ein anzutreibendes zweites Kupplungsteil aufweisen, wobei die zweiten Kupplungsteile über eine Mitnehmereinrichtung verbunden sind, welche nach dem Ansprechen einer der Überlastkupplungen die Drehmitnahme der zweiten Kupplungsteile der weiteren Übelastkupplungen nach Durchmessen eines vorgegebenen Drehwinkelbereichs bewirkt.

Durch diese erfindungsgemäße Ausgestaltung und Kopplung der Überlastkupplungen durch eine Mitnehmereinrichtung nach einem gewissen Drehwinkelbereich wird in vorteilhafter Weise erreicht, daß unter Beibehaltung des Synchronlaufs der anzutreibenden Maschinengruppen im zulässigen Toleranzbereich beim Anstoßen an ein Hindernis nur jeweils eine der Überlastkupplungen anspricht. Nachdem die beiden Überlastkupplungen nur ca. jeweils 50 % des Drehmomentes einer Gesamtüberlastkupplung zu übertragen haben, werden die Antriebsteile auch nur mit einem 50 %-Anteil des Drehmomentes gegenüber der bisher bekannten Ausführung belastet. Es ist dadurch in einfacher Weise möglich, die Antriebsteile konstruktiv weniger aufwendig zu dimensionieren und somit unter Beibehaltung des erforderlichen Synchronlaufs der anzutreibenden Maschinengruppen eine insgesamt kostengünstigere Maschinenkonstruktion zu erhalten.

In Ausgestaltung der Erfindung ist vorgesehen, daß das erste Kupplungsteil durch ein Kupplungsaußenteil und das zweite Kupplungsteil durch ein darin aufgenommenes Kupplungsinnenteil dargestellt ist und zwischen beiden federbelastete Mitnehmernocken wirksam sind, die dem Kupplungsinnenteil zugeordnet sind und in Aufnahmesicken des Kupplungsaußenteils eingreifen.

Gemäß einer konkreteren Ausführung der Erfindung ist vorgesehen, daß die Abtriebe durch die Antriebswellen für die Maschinengruppen dargestellt sind, die zueinander fluchtend verlaufen, wobei auf deren einander zugewandten Wellenenden jeweils ein Kupplungsinnenteil drehfest befestigt und ein gemeinsames Kupplungsaußenteil mit dem Tellerrad eines Antriebsgetriebes verbunden ist. Dabei ergibt sich eine besonders vorteilhafte Ausführungsform, wenn die Überlastkupplungen unmittelbar neben einem Antriebsgetriebe angeordnet sind. Diese Ausführungsform ist insbesondere für solche Heuwerbungsmaschinen geeignet, deren mittlere Kreiselrechen in fester Zuordnung zueinander bleiben, d. h., die weder seitlich noch aufwärts geschwenkt werden müssen.

Eine noch kompaktere Bauweise wird dadurch erreicht, daß die Überlastkupplungen innerhalb eines Antriebsgetriebes angeordnet sind. Durch diese integrierte Anordnung der Überlastkupplungen innerhalb des Antriebsgetriebes wird neben der besonders kompakten Bauform ein Schutz der Überlastkupplungen gegen Verschmutzungen erreicht.

Für eine besonders vorteilhafte Ausführungsform wird vorgeschlagen, daß das Antriebsgetriebe mit integrierten Überlastkupplungen eine Ölbadschmierung besitzt. Aufgrund dieser Ölbadschmierung ist eine besonders hohe Lebensdauer sowohl für die Antriebsteile innerhalb des Getriebes als auch für die integrierten Überlastkupplungen zu erwarten.

Für eine weitere vorteilhafte Ausführungsform der Erfindung ist vorgesehen, dass den synchron anzutreibenden Maschinengruppen ein Leistungsverzweigungsgetriebe mit einer Antriebswelle als gemeinsamer Antrieb zugeordnet ist, das eine dazu fluchtende erste Abtriebswelle mit einer zwischengeschalteten ersten Überlastkupplung sowie eine zweite, parallel zu der ersten angeordnete Abtriebswelle eine zweite Überlastkupplung aufweist, wobei das antreibende Kupplungsteil der ersten Überlastkupplung, das mit der Antriebswelle verbunden ist, mit dem antreibenden Kupplungsteil der zweiten Überlastkupplung an der zweiten Abtriebswelle drehmäßig gekoppelt ist und die zweiten Kupplungsteile der Überlastkupplungen durch Kupplungszahnräder und die Mitnehmereinrichtung miteinander gekoppelt sind. Ein solches Vorschalt-Leistungsver-zweigungsgetriebe ist besonders vorteilhaft bei solchen Heuwerbungsmaschinen, beispielsweise Zettern, bei denen zwecks Arbeitsbreitenreduzierung durch Aufwärtsschwenken bzw. seitliches Schwenken eine Trennung der beiden mittleren Kreiselrechen voneinander erforderlich ist. Durch das Vorschalt-Leistungsverzweigungsgetriebe wird dabei auf jeden Fall der Synchronlauf der anzutreibenden Maschinengruppen und damit auch der beiden mittleren Kreiselrechen gewahrt. Auch bei dieser Ausführungsform ist eine besonders kostengünstige Ausgestaltung der Antriebsteile möglich, da beim Ansprechen einer der Überlastkupplungen die Antriebsteile jeweils nur mit einem ca. 50 %-Anteil des Drehmoments einer Gesamtüberlastkupplung belastet werden.

Grundsätzlich ist auch eine Ausführungsform denkbar, bei der das Vorschalt-Leistungsverzweigungsgetriebe drei oder mehr Abtriebswellen besitzt.

Die Erfindung ist an Ausführungsbeispielen, die in der Zeichnung dargestellt sind, nachfolgend näher erläutert.

Es zeigt
- Fig. 1: in schematischer Darstellung, teilweise im Schnitt, ein Antriebsgetriebe für einen Zetter, an das eine Antriebsanordnung mit zwei Überlastkupplungen, die an ein Gehäuse angeflanscht und für den Antrieb die für den Antrieb zweier Antriebswellen vorgesehen sind, angeschlossen ist,
- Fig. 2: ein zu Fig. 1 abgewandeltes Antriebsgetriebe, bei dem zwei Überlastkupplungen innerhalb des Getriebegehäuses angeordnet sind,
- Fig. 3: schematisch in Draufsicht, teilweise im Schnitt, ein den Einzelgetrieben der Maschinengruppen vorgeschaltetes Leistungsverzweigungsgetriebe mit im Getriebegehäuse angeordneten Überlastkupplungen und
- Fig. 4: eine schematische Draufsicht im Schnitt bezüglich eines Antriebsgetriebes mit drei Überlastkupplungen und drei Abtriebswellen.

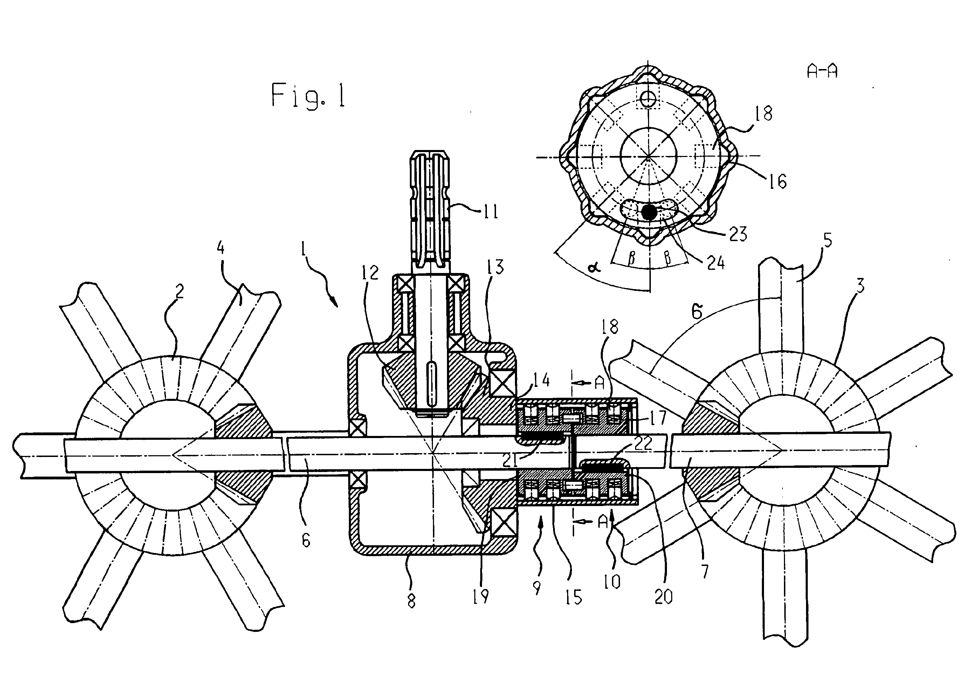

Die Fig. 1 zeigt in Draufsicht eine Teilansicht eines Zetters 1 mit einem linken Kreiselrechen 2 sowie einem rechten Kreiselrechen 3, an die sich jeweils weitere nicht dargestellte Kreiselrechen seitlich anschließen. Die beiden Kreiselrechen 2 und 3 weisen dabei nicht näher dargestellte Zinkentragarme 4 bzw. 5 auf, deren äußere Umlaufkreise sich überschneiden, so daß die Zinkentragarme benachbarter Kreiselrechen ineinander greifen. Zur Vermeidung von Kollisionen dieser ineinandergreifenden Zinkentragarme 4 und 5 ist ein Synchronlauf der Kreiselrechen 2 und 3 zumindest in einem gewissen Toleranzbereich zwingend erforderlich.

Beim dargestellten Ausführungsbeispiel ist die Hauptantriebswelle für die Kreiselrechen in eine linke erste Antriebswelle 6 sowie in eine rechte zweite Antriebswelle 7 unterteilt. Der Antrieb dieser Antriebswellen 6 und 7 erfolgt über ein Getriebe 8 sowie eine erste Überlastkupplung 9 und eine zweite Überlastkupplung 10. Das Getriebe 8 besitzt einen über eine nicht dargestellte Gelenkwelle antreibbaren Antriebswellenstummel 11, auf dem innerhalb des Getriebegehäuses ein Ritzel 12 befestigt ist, welches ein Tellerrad 13 antreibt. Mit der Nabe 14 des Tellerrades 13 ist ein für beide Überlastkupplungen 9 und 10 vorgesehenes antreibendes Kupplungsaußenteil 15 verbunden. Das Kupplungsaußenteil 15 weist, wie dies auch die Schnittdarstellung A - A zeigt, auf dem Innenumfang verteilte Aufnahmesicken 16 auf, in die durch Federn 17 belastete Mitnehmernocken 18 des ersten und des zweiten Kupplungsinnenteiles 19 bzw. 20 eingreifen. Das erste Kupplungsinnenteil 19 ist dabei mit der ersten Antriebswelle 6 beispielsweise über eine Paßfeder 21 und das zweite Kupplungsinnenteil 20 mit der zweite Antriebswelle 7 beispielsweise über eine Paßfeder 22 zur Drehmitnahme verbunden.

Da für den linken Kreiselrechen 2 sowie für den rechten Kreiselrechen 3 ein Synchronlauf zumindest in einem gewissen Toleranzbereich beibehalten werden muß, sind zwischen dem ersten und dem zweiten Kupplungsinnenteil 19 bzw. 20 Mitnehmerteile, z. B. Mitnehmerstifte 23 und zugehörige Nutausnehmungen 24 vorgesehen, die beim Ansprechen einer der Überlastkupplungen 9 bzw. 10 nach dem Durchlaufen eines Drehwinkels β (dies kann sowohl in der einen als auch in der anderen Richtung erfolgen) eine Drehmitnahme des jeweils anderen Kupplungsinnenteiles 19 bzw. 20 bewirken. Grundsätzlich sind die beiden Überlastkupplungen 9 bzw. 10 so eingestellt, daß sie jeweils die Hälfte des maximal benötigten Antriebsmoments in der Gesamtmaschine für die beiden Kreiselrechen 2, 3 übertragen. Beim Anstoßen eines Kreiselrechens 2, 3 an ein Hindernis spricht zunächst nur eine Überlastkupplung 9 bzw. 10 an, wonach demzufolge die vorgeschalteten Antriebsteile auch jeweils nur mit der Hälfte des maximal benötigten Antriebsmoments belastet werden. Bei anhaltender Blockierung durch ein Hindernis sprechen die Überlastkupplungen 9 bzw. 10 jeweils wechselweise an, wobei dann jeweils im Wechsel das zu übertragende Drehmoment der Überlastkupplungen 9, 10 nach deren Ansprechen auf ein Restmoment abfällt, bevor die weitere Überlastkupplung anspricht.

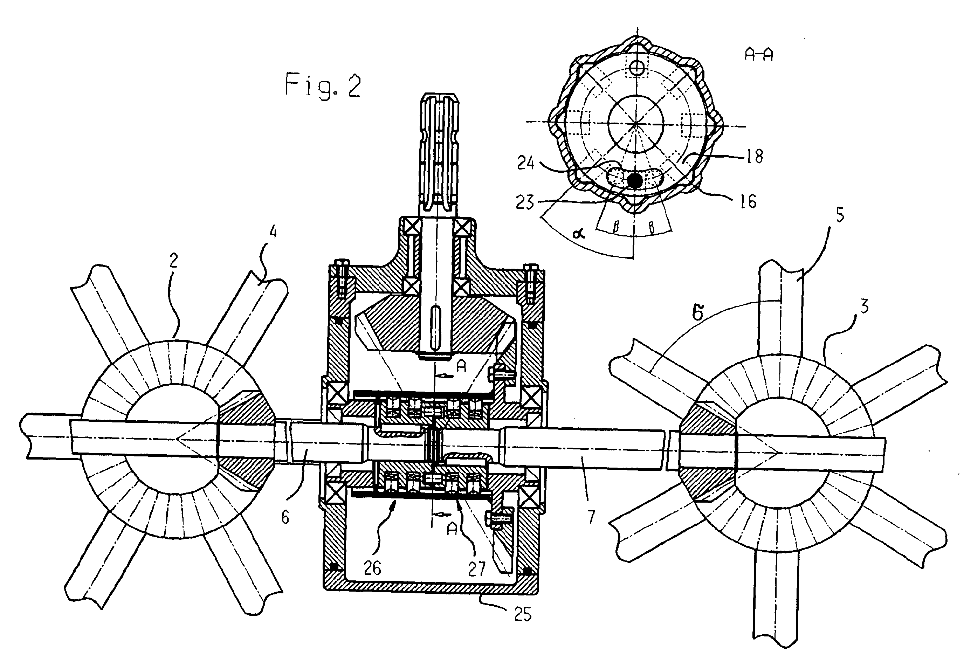

Die Fig. 2 zeigt eine in wesentlichen Bauteilen baugleiche Ausführung zu Fig. 1, wobei jedoch die Überlastkupplungen 26, 27 in den Bereich innerhalb des Getriebes 25 verlagert worden sind. Die Überlastkupplungen 26 und 27 sind dabei staubgeschützt und geschmiert innerhalb des Getriebegehäuses untergebracht, wodurch eine lange Lebensdauer zu erwarten ist.

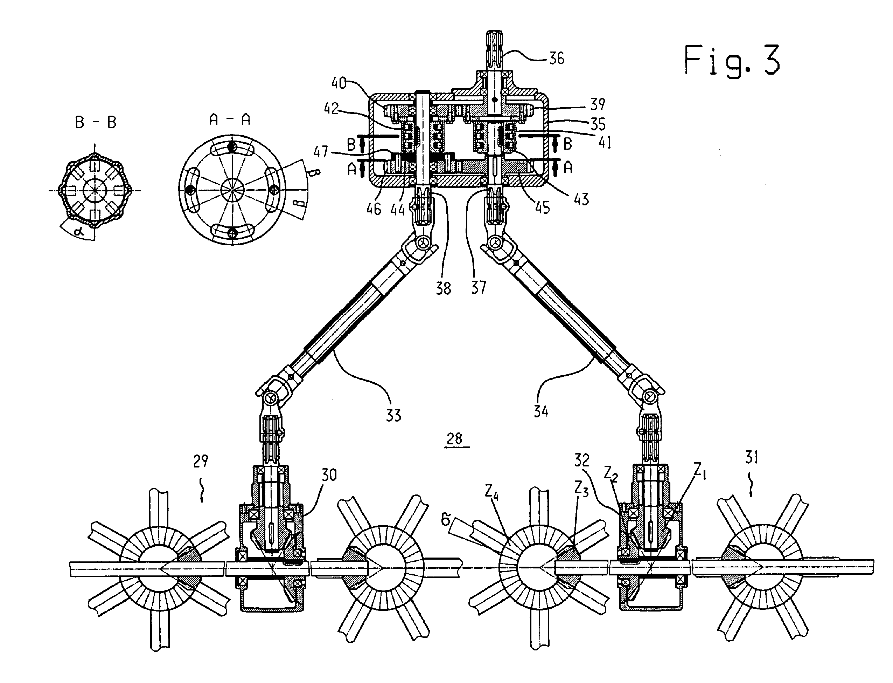

Beim Ausführungsbeispiel gemäß Fig. 3 besteht der Zetter 28 aus einer linken (ersten) Maschinengruppe 29 mit einem Antriebsgetriebe 30 sowie einer rechten (zweiten) Maschinengruppe 31 mit einem Antriebsgetriebe 32. Der Antrieb der beiden Antriebsgetriebe 30 und 32 erfolgt über Gelenkwellen 33 und 34, die ihrerseits durch ein Leistungsverzweigungsgetriebe 35 angetrieben werden.

Das Leistungsverzweigungsgetriebe 35 besitzt eine Antriebswelle 36 sowie eine erste Abtriebswelle 37 und eine zweite Abtriebswelle 38. Die Antriebswelle 36 ist drehfest mit einem ersten Zahnrad 39 verbunden, das mit einem zweiten, auf der zweiten Abtriebswelle 38 frei drehbar gelagerten Zahnrad 40 in Eingriff steht. Beide Zahnräder 39 bzw. 40 sind mit einem ersten Kupplungsaußenteil 41 bzw. zweiten Kupplungsaußenteil 42 gekoppelt, wodurch die Kupplungsaußenteile 41 und 42 ständig zur Drehmitnahme miteinander gekoppelt sind. Die erste Abtriebswelle 37 ist in dem Leistungsverzweigungsgetriebe 35 fluchtend zu der Antriebswelle 36 gelagert. Auf der ersten Abtriebswelle 37 ist im Bereich des ersten Kupplungsaußenteils 41 ein erstes Kupplungsinnenteil 43 drehfest befestigt. Das zweite Kupplungsinnenteil 44 ist im zweiten Kupplungsaußenteil 42 auf der zweiten Abtriebswelle 38 drehfest befestigt.

Zur Kopplung der Kupplungsinnenteile 43 und 44 sind zwei weitere Zahnräder 45 bzw. 46 vorgesehen, wobei das Zahnrad 45 drehfest auf der ersten Abtriebswelle 37 befestigt ist. Das Zahnrad 46 hingegen ist frei drehbar auf der zweiten Abtriebswelle 38 gelagert. Zwischen dem Zahnrad 46 und dem zweiten Kupplungsinnenteil 44 ist eine Mitnehmereinrichtung 47 vorgesehen, die beim Ansprechen einer der Überlastkupplungen, z. B. beim Anstoßen an ein Hindernis, nach einem kurzen, den Synchronlauf der anzutreibenden Maschinengruppen im zulässigen Toleranzbereich erhaltenden Drehwinkelbereich, bei dem das zu übertragende Drehmoment dieser Überlastkupplung auf ein Restmoment abfällt, eine Mitnahme des jeweils anderen Kupplungsinnenteils bewirkt. Auch bei diesem Ausführungsbeispiel werden die Antriebsteile beim Anstoßen eines der Kreiselrechen an ein Hindernis jeweils nur mit der Hälfte des maximal benötigten Antriebsmoments belastet. Anstelle der dargestellten Zahnradverbindungen sind selbstverständlich auch Kettenverbindungen od. dgl. einsetzbar.

Die Anordnung eines solchen vorgeschalteten Leistungsverzweigungsgetriebes 35 ist insbesondere für solche Maschinen vorteilhaft, bei denen durch Schwenken der linken Maschinengruppe 29 sowie der rechten Maschinengruppe 31 eine Verringerung der Maschinenbreite zum Zwecke des Transports erreicht werden soll, wobei dann bei diesem Schwenken eine Trennung der beiden mittleren Kreiselrechen voneinander erfolgt..

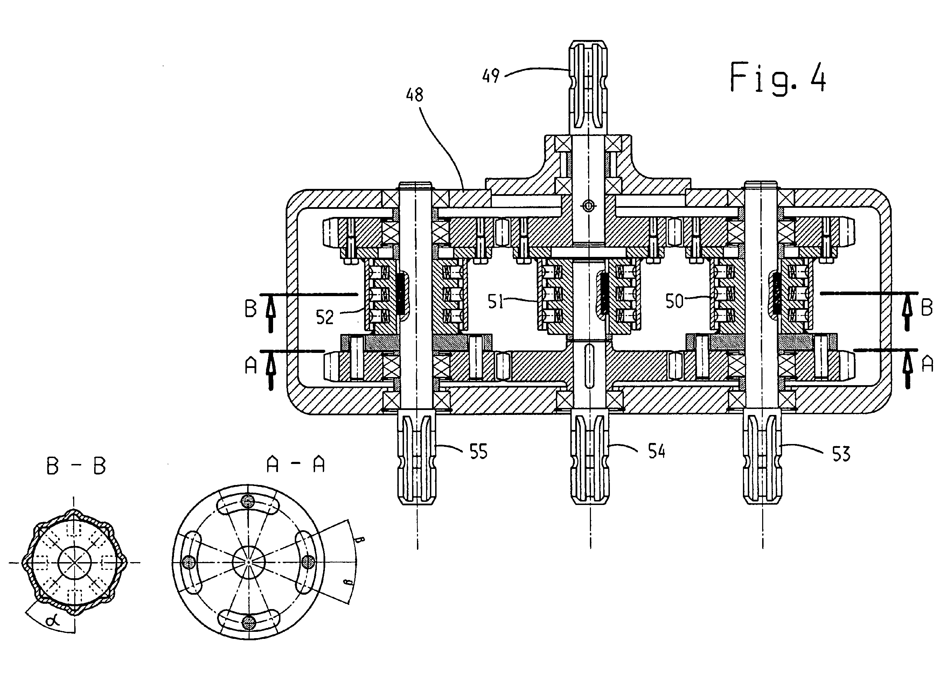

Die Fig. 4 zeigt eine weitere Ausführungsform eines Leistungsverzweigungsgetriebes 48. Das Leistungsverzweigungsgetriebe 48 besitzt eine Antriebswelle 49 sowie drei über Überlastkupplungen 50, 51, 52 abgesicherte Abtriebswellen 53, 54 und 55. Bis auf die Anordnung eines dritten Abtriebswellenstummels ist der Aufbau des Leistungsverzweigungsgetriebes 48 weitgehend identisch mit dem Leistungsverzweigungsgetriebe 35 gemäß Fig. 3 und weist dabei im wesentlichen gleiche bzw. ähnliche Bauteile auf.

## Patentansprüche

1. Antriebsanordnung für eine landwirtschaftliche Maschine, insbesondere Heuwerbungsmaschine, mit mindestens zwei im Wege der Leistungsverzweigung durch einen gemeinsamen Antrieb (11, 36, 49) über jeweils einen Abtrieb (6, 7; 37, 38; 53, 54, 55) synchron antreibbare Maschinengruppen (2, 3; 29, 31) und mit Mitteln zur Absicherung gegen Überlastung,
**dadurch gekennzeichnet,**
**daß** jedem Abtrieb (6, 7; 37, 38; 53, 54, 55) eine Überlastkupplung (9, 10; 26, 27; 50, 51, 52) in Form einer Sperrkörperkupplung, deren zu übertragendes Drehmoment nach dem Ansprechen auf ein Restmoment abfällt, zugeordnet ist,
**daß** alle Überlastkupplungen (9, 10; 26, 27; 50, 51, 52) ein gemeinsames antreibendes erstes Kupplungsteil (15) aufweisen, das mit dem Antrieb (11) verbunden ist oder jeweils ein antreibendes erstes Kupplungsteil (41, 42) aufweisen, wobei die einzelnen ersten Kupplungsteile (41, 42) drehmäßig miteinander und dem Antrieb (36, 49) verbunden sind,
**daß** alle Überlastkupplungen (9, 10; 26, 27; 50, 51, 52) jeweils ein anzutreibendes zweites Kupplungsteil (19, 20; 43, 44) aufweisen, wobei die zweiten Kupplungsteile (19, 20; 43, 44) über eine Mitnehmereinrichtung (23, 24) verbunden sind, welche nach dem Ansprechen einer der Überlastkupplungen (9, 10; 26, 27; 50, 51 ,52) die Drehmitnahme der zweiten Kupplungsteile (19, 20; 43, 44) der weiteren Übelastkupplungen (9, 10; 26, 27; 50, 51, 52) nach Durchmessen eines vorgegebenen Drehwinkelbereichs bewirkt.

2. Antriebsanordnung nach Anspruch 1,
**dadurch gekennzeichnet,**
**daß** das erste Kupplungsteil (15, 41 ,42) durch ein Kupplungsaußenteil und das zweite Kupplungsteil (19, 20; 43, 44) durch ein darin aufgenommenes Kupplungsinnenteil dargestellt ist und zwischen beiden federbelastete Mitnehmernocken (18) wirksam sind, die dem Kupplungsinnenteil zugeordnet sind und in Aufnahmesicken (16) des Kupplungsaußenteils eingreifen.

3. Antriebsanordnung nach einem der Ansprüche 1 oder 2,
**dadurch gekennzeichnet,**
**daß** die Abtriebe (6, 7) durch die Antriebswellen für die Maschinengruppen dargestellt sind, die zueinander fluchtend verlaufen, wobei auf deren einander zugewandten Wellenenden jeweils ein Kupplungsinnenteil (19, 20) drehfest befestigt und ein gemeinsames Kupplungsaußenteil befestigt und ein gemeinsames Kupplungsaußenteil (15) mit dem Tellerrad (13) eines Antriebsgetriebes verbunden ist.

4. Antriebsanordnung nach Anspruch 3,
**dadurch gekennzeichnet,**
**daß** die Überlastkupplungen (9, 10) unmittelbar neben dem Antriebsgetriebe (8) angeordnet sind.

5. Antriebsanordnung nach Anspruch 1,
**dadurch gekennzeichnet,**
**daß** die Überlastkupplungen (26, 27; 50, 51, 52) innerhalb des Antriebsgetriebes (25) angeordnet sind.

6. Antriebsanordnung nach Anspruch 5,
**dadurch gekennzeichnet,**
**daß** das Antriebsgetriebe (25) mit integrierten Überlastkupplungen (26, 27) eine Ölbadschmierung besitzt.

7. Antriebsanordnung nach Anspruch 1,
**dadurch gekennzeichnet,**
**daß** den synchron anzutreibenden Maschinengruppen (29, 31) ein Leistungsverzweigungsgetriebe (35) mit einer Antriebswelle (36) als gemeinsamer Antrieb zugeordnet ist, das eine dazu fluchtende erste Abtriebswelle (37) mit einer zwischengeschalteten ersten Überlastkupplung sowie eine zweite, parallel zu der ersten angeordnete Abtriebswelle (38) eine zweite Überlastkupplung aufweist, wobei das antreibende Kupplungsteil der ersten Überlastkupplung (41), das mit der Antriebswelle (36) verbunden ist, mit dem antreibenden Kupplungsteil der zweiten Überlastkupplung (44) an der zweiten Abtriebswelle (38) drehmäßig gekoppelt ist und die zweiten Kupplungsteile (43, 44) der Überlastkupplungen (42, 44) durch Kupplungszahnräder (45, 46) und die Mitnehmereinrichtung (47) miteinander gekoppelt sind.

8. Antriebanordnung nach Anspruch 1,
**dadurch gekennzeichnet,**
**daß** das Leistungsverzweigungsgetriebe (48) drei oder mehr Abtriebswellen (53, 54, 55) mit zwischengeschalteten Überlastkupplungen (50, 51, 52) besitzt.

## Claims

1. Driving arrangement for an agricultural machine, especially hay making machine, with at least two machine units (2, 3; 29, 31), which are driven by a common drive (11, 36, 49) synchronously by means of power distribution via, respectively, one output (6, 7; 37, 38; 53, 54, 55) and with means for the prevention of an overload,
**characterised**
**in that** to each output (6, 7; 37, 38; 53, 54, 55) an overload coupling (9, 10; 26, 27; 50, 51, 52) in form of an overload coupling with locking members is arranged, which to be transmitted torque, after actuation due to overload, falls to a residual torque,
**in that** all overload couplings (9, 10; 26, 27; 50, 51, 52) have a joint driving first coupling member (15), which is connected to the drive (11) or, respectively, have a driving first coupling member (41, 42), wherein the individual first coupling members (41, 42) are connected rotationally-wise to each other and to the drive (36, 49),
**in that** all overload couplings (9, 10; 26, 27; 50, 51, 52) have, respectively, a to be driven second coupling member (19, 20; 43, 44), wherein the second coupling members (19, 20; 43, 44) are connected via a catching device (23, 24), which, after the actuation of one of the overload couplings (9, 10; 26, 27; 50, 51, 52), causes a rotational driving of the second coupling members (19, 20; 43, 44) of the further overload couplings (9, 10; 26, 27; 50, 51, 52) after having passed a predetermined rotational angle range.

2. Driving arrangement according to claim 1,
**characterised in that**
the first coupling member (15, 41, 42) is represented by an outer coupling member and the second coupling member (19, 20; 43, 44) is represented by an inner coupling member accommodated therein and that between the two, spring loaded driving cam members (18) are active, which are arranged to the inner coupling member and engage in accommodation beads (16) of the outer coupling member.

3. Driving arrangement according to one of claims 1 or 2,
**characterised in that**
the outputs (6, 7) are represented by the drive shafts for the machine units, which extend aligned, wherein on their shaft ends, facing each other, an inner coupling member (19, 20) is, respectively, attached non-rotationally and a joint outer coupling member is attached and **in that** one joint outer coupling member (15) is connected to the ring gear (13) of a drive gear.

4. Driving arrangement according to claim 3,
**characterised in that**
the overload couplings (9, 10) are arranged directly next to the drive gear (8).

5. Driving arrangement according to claim 1,
**characterised in that**
the overload couplings (26, 27; 50, 51, 52) are arranged within the drive gear (25).

6. Driving arrangement according to claim 5,
**characterised in that**
the drive gear (25) with integrated overload couplings (26, 27) has an oil bath lubrication.

7. Driving arrangement according to claim 1,
**characterised in that**
to the machine units (29, 31) to be driven synchronously, a power distribution gear (35) with a drive shaft (36) as a joint drive is arranged, which has a first output shaft (37), arranged in alignment thereto, with an interconnected first overload coupling as well as a second overload coupling arranged parallel to the first output shaft (38), wherein the driving coupling member of the first overload coupling (41), which is connected to the drive shaft (36), is coupled rotationally to the driving coupling member of the second overload coupling (44) on the second output shaft (38) and wherein the second coupling members (43, 44) of the overload couplings (42, 44) are coupled to each other by means of coupling gears (45, 46) and the catching device (47).

8. Driving arrangement according to claim 1,
**characterised in that**
the power distribution gear (48) has three or more output shafts (53, 54, 55) with interconnected overload couplings (50, 51, 52).

## Revendications

1. Dispositif d'entraînement pour une machine agricole, notamment pour une faneuse, avec au moins deux groupes de machines (2, 3 ; 29, 31) pouvant être entraînés de façon synchrone via le branchement de couple par un entraînement commun (11, 36, 49) par respectivement un arbre de sortie (6, 7 ; 37, 38 ; 53, 54, 55) et avec des moyens de sécurité contre une surcharge,
**caractérisé en ce qu'**un accouplement de surcharge (9, 10 ; 26, 27 ; 50, 51, 52) sous la forme d'un accouplement à corps d'arrêt, dont le couple de rotation devant être transmis tombe à un moment résiduel après le déclenchement est associé à chaque sortie (6, 7 ; 37, 38 ; 53, 54, 55),
**en ce que** tous les accouplements de surcharge (9, 10 ; 26, 27 ; 50, 51, 52) comportent un premier élément d'accouplement (15) à entraînement commun, qui est relié à l'arbre de sortie (11) ou comportent chacun un premier élément d'accouplement entraîneur (41, 42), les premiers éléments d'accouplement individuels (41, 42) étant reliés en rotation entre eux et avec l'arbre de sortie (36, 49),
**en ce que** tous les accouplements de surcharge (9, 10 ; 26, 27 ; 50, 51, 52) comportent chacun un élément d'accouplement (19, 20 ; 43, 44) devant être entraîné, les deuxièmes éléments d'accouplement (19, 20 ; 43, 44) étant reliés par un dispositif d'entraîneurs (23, 24), qui après le déclenchement de l'un des accouplements de surcharge (9, 10 ; 26, 27 ; 50, 51, 52) assure l'entraînement en rotation des deuxièmes éléments d'accouplement (19, 20 ; 43, 44) des autres accouplements de surcharge (9, 10 ; 26, 27 ; 50, 51, 52) après passage d'une plage d'angle de rotation prédéfinie.

2. Dispositif d'entraînement selon la revendication 1,
**caractérisé en ce que** le premier élément d'accouplement (15, 41, 42) est représenté par un élément extérieur d'accouplement et le deuxième élément d'accouplement (19, 20 ; 43, 44) est représenté par un élément intérieur d'accouplement logé dans ce dernier et **en ce que** des cames d'entraînement (18) soumises à ressort associées à l'élément intérieur d'accouplement agissent entre ces deux et s'engagent dans des moulures de logement (16) de l'élément extérieur d'accouplement.

3. Dispositif d'entraînement selon l'une quelconque des revendications 1 ou 2,
**caractérisé en ce que** les arbres de sortie (6, 7) sont représentés par les arbres d'entraînement pour les groupes de machines, qui s'étendent en alignement mutuel, un élément intérieur d'accouplement (19, 20) étant fixé de façon solidaire en rotation sur leurs extrémités d'arbre se faisant face mutuellement et un élément extérieur d'accouplement commun étant fixé et un élément extérieur d'accouplement commun (15) étant relié avec la couronne de différentiel (13) d'une transmission moteur.

4. Dispositif d'entraînement selon la revendication 3,
**caractérisé en ce que** les accouplements de surcharge (9, 10) sont disposés directement à côté de la transmission moteur (8).

5. Dispositif d'entraînement selon la revendication 1,
**caractérisé en ce que** les accouplements d'entraînement (26, 27 ; 50, 51, 52) sont disposés à l'intérieur de la transmission moteur (25).

6. Dispositif d'entraînement selon la revendication 5,
**caractérisé en ce que** l'entraînement moteur (25) avec accouplements de surcharge intégrés (26,27) est muni d'un graissage par bain d'huile.

7. Dispositif d'entraînement selon la revendication 1,
**caractérisé en ce qu'**une transmission par branchement de couple (35) avec un arbre d'entraînement (36) est associée en tant qu'entraînement commun au groupes de machines (29, 31) devant être entraîné de façon synchrone, **en ce qu'**un premier arbre de sortie (37) aligné sur cette dernière avec un premier accouplement de surcharge intermédiaire ainsi qu'un deuxième arbre de sortie (38) disposé à la parallèle du premier comporte un deuxième accouplement de surcharge, l'élément d'accouplement entraîneur du premier accouplement de surcharge (41) qui est relié avec l'arbre de sortie (36) étant accouplé en rotation avec l'élément d'accouplement entraîneur du deuxième accouplement de surcharge (44) sur le deuxième arbre de sortie (38) et les deuxièmes éléments d'accouplement (43, 44) des accouplements de surcharge (42, 44) étant accouplés mutuellement par des roues dentées d'accouplement (45, 46) et par le dispositif d'entraîneurs (47).

8. Dispositif d'entraînement selon la revendication 1,
**caractérisé en ce que** l'entraînement par branchement de couple (48) dispose de trois arbres de sorties (53, 54, 55) ou plus, avec des accouplements de surcharge (50, 51, 52) intermédiaires.
